Europäisches Patentamt

European Patent Office

Office européen des brevets

(11) Numéro de publication: **0 434 494 B1**

(12) **FASCICULE DE BREVET EUROPEEN**

(45) Date de publication de fascicule du brevet: **05.04.95** (51) Int. Cl.6: **C08F 291/02**, C08F 279/02, C08F 265/04

(21) Numéro de dépôt: **90403488.1**

(22) Date de dépôt: **07.12.90**

(54) **Procédé de fabrication d'une plaque coulée à base de résine thermoplastique.**

(30) Priorité: **21.12.89 FR 8916974**

(43) Date de publication de la demande:
**26.06.91 Bulletin 91/26**

(45) Mention de la délivrance du brevet:
**05.04.95 Bulletin 95/14**

(84) Etats contractants désignés:
**AT BE CH DE DK ES FR GB GR IT LI LU NL SE**

(56) Documents cités:
**EP-A- 0 305 272**

(73) Titulaire: **ELF ATOCHEM S.A.**
**4 & 8, Cours Michelet**
**La Défense 10**
**F-92800 Puteaux (FR)**

(72) Inventeur: **Heim, Philippe**
**4 Rue Taffanel**
**F-60550 Verneuil en Halatte (FR)**
Inventeur: **Gaillard, Patrice**
**91 Avenue Jean Mermoz**
**F-64000 Pau (FR)**

(74) Mandataire: **Leboulenger, Jean et al**
**ATOCHEM**
**Département Propriété Industrielle**
**Cédex 42- La Défense 10**
**F-92091 Paris la Défense (FR)**

## Description

La présente invention se rapporte à un procédé de fabrication d'une plaque coulée à base d'une résine thermoplastique résistante au choc comprenant une matrice et un latex de renforcement, ce procédé comportant une étape de transfert, à l'aide d'agents ioniques, des particules du latex de renforcement dans les monomères de la matrice, suivi d'une étape de polymérisation en masse du latex et des monomères de la matrice. Elle concerne également les plaques coulées obtenues par ce procédé.

La demande de brevet EP-A-0.297.706 décrit un procédé de fabrication d'une plaque coulée à base d'une résine thermoplastique résistante au choc comprenant au moins 0,25% mais moins de 4% en poids d'un latex de type acrylique dans une matrice constituée principalement de méthacrylate de méthyle, consistant dans un premier temps à disperser le latex à structure coeur élastomère, sous forme de poudre coagulée, atomisée ou congelée ou sous forme de granulats, dans le(s) monomère(s) de la matrice, puis, dans un second temps, à polymériser entre deux plaques le(s) monomère(s) contenant le latex dispersé. Cette méthode nécessite cependant des temps très longs pour l'étape de dissolution du latex dans le(s) monomère(s) de la matrice et nécessite également de disposer de latex floculé et séché dont les particules comportent obligatoirement une coquille en polyméthacrylate de méthyle.

Pour surmonter ces inconvénients, des recherches ont été conduites pour proposer un procédé de fabrication de plaques coulées à base de résine thermoplastique résistante au choc modifiée par un latex élastomère pouvant ne pas comporter de coquille en polyméthacrylate de méthyle, ledit procédé s'appuyant sur le principe de la technique de transfert de phase d'un latex aqueux, telle que décrite dans la demande de brevet EP-A-0.305.272, permettant ainsi d'obtenir économiquement et rapidement une solution de monomère(s) de la matrice, contenant le latex, solution qu'il suffit ensuite de polymériser par une technique de coulée.

Le procédé objet de la présente invention, conduisant à la production d'une plaque coulée à base de résine thermoplastique résistante au choc, modifiée par un latex élastomère comprend la séquence d'étapes suivante :

(a) dans une première étape on prépare un latex élastomère en émulsion aqueuse, en présence d'au moins un agent tensio-actif ionique, d'au moins un monomère éthyléniquement insaturé ; puis

(b) dans une seconde étape on ajoute au latex ainsi obtenu au moins un monomère vinylique, insoluble dans l'eau ou faiblement soluble dans l'eau et on neutralise les charges ioniques portées par ledit latex en ajoutant au mélange de latex et de monomère vinylique au moins un agent de transfert portant des charges ioniques opposées à celles du tensio-actif utilisé à l'étape (a), afin de réaliser le transfert des particules du latex dans le monomère vinylique, puis

(c) dans une troisième étape on sépare de la phase aqueuse la phase organique comprenant le latex et le monomère vinylique, et enfin

(d) dans une quatrième étape, on effectue la polymérisation en masse de la phase organique de manière à obtenir la plaque coulée après refroidissement et démoulage.

Dans les modes de réalisation particuliers selon l'invention, le monomère éthyléniquement insaturé de l'étape (a) est de préférence choisi parmi les diènes, les diènes substitués, les acrylates d'alkyle, les acrylates d'aralkyle et les oléfines. Plus particulièrement, parmi les diènes conjugués entrant dans la définition de ce monomère éthyléniquement insaturé, on peut mentionner l'isoprène, le chloroprène, le diméthyl-2,3 butadiène et le butadiène-1,3. Parmi les acrylates d'alkyle entrant dans la définition précitée, on peut mentionner ceux qui présentent des groupes alkyle en $C_1$-$C_{15}$, avantageusement en $C_1$-$C_8$, et , de préférence, en $C_2$-$C_8$. En particulier, on peut citer l'acrylate de n-butyle, l'acrylate d'éthyle, l'acrylate de 2-éthylhexyle et l'acrylate d'isobutyle. On pourrait également mettre en oeuvre des acrylates d'alkyle dont les groupes alkyle ont une chaîne plus longue. Parmi les acrylates d'aralkyle entrant dans la définition précitée, on peut citer ceux dans lesquels la parties cyclique contient 5, 6 ou 7 atomes de carbone, avec ou sans pont alkyle supplémentaire, et la partie alkyle contient jusqu'à 15 atomes de carbone. Cette liste des acrylates englobe également les acrylates substitués, tels que les acrylates d'alkylthioalkyle (par exemple, acrylate d'éthylthioéthyle) et les acrylates d'alcoxyalkyle (par exemple, acrylate de méthoxyéthyle).

Le monomère vinylique ajouté au latex lors de l'étape (b) est de préférence choisi parmi les méthacrylates d'alkyle dont le groupe alkyle comporte de 1 à 4 atomes de carbone, les hydrocarbures vinylaromatiques, l'acrylonitrile, le méthacrylonitrile et les halogénures de vinyle. Comme monomère principal entrant dans la définition de ce monomère vinylique, on peut mentionner le méthacrylate de méthyle, que l'on préfère, le méthacrylate d'éthyle, le méthacrylate d'isopropyle, le méthacrylate de n-butyle, le méthacrylate de sec-butyle, le méthacrylate de tert.-butyle, le styrène, l' $\alpha$-méthyl styrène, le monochlorostyrène, le tert.-butyl styrène, le vinyltoluène.

On choisit généralement la quantité de monomère vinylique de telle sorte que la plaque coulée produite contienne de 0,5% à 20% en poids de latex élastomère et de 99,5% à 80% en poids dudit monomère vinylique. De préférence, la plaque coulée produite contiendra de 2% à 7% en poids de latex élastomère et de 98% à 93% en poids de monomère vinylique. Il est à ce titre surprenant de constater que, d'aussi faibles teneurs en latex élastomère puissent conférer d'excellentes propriétés de résistance à l'impact alors qu'on utilise en général au moins 20% en poids de latex élastomère dans le cas de matériaux chocs obtenus par compoundage.

On décrira maintenant différents modes de réalisation de chacune des étapes du procédé qui vient d'être défini sous son aspect le plus général. Pour ce qui concerne les étapes (a) et (b), et plus précisément pour ce qui concerne le choix de l'agent tensio-actif, le choix de l'agent de transfert, la méthode de préparation du latex ainsi que la méthode de transfert dudit latex dans le monomère vinylique ajouté lors de l'étape (b), on se référera à la demande de brevet EP-A-0.305.272, dont la description sera incorporée ici par référence. On notera à ce propos que l'on peut faire suivre l'étape (a) par une étape (a1) complémentaire, consistant en une polymérisation en émulsion, avec le latex obtenu à l'étape (a), d'au moins un monomère vinylique, dit monomère de compatibilisation, appartenant à la famille des monomères introduits à l'étape (b). A cette étape (a1) on utilise avantageusement, pour 100 parties en poids du mélange formé par le latex et le(s) monomères de compatibilisation, de 99 à 15 parties en poids de la partie solide dudit latex et de 1 à 85 parties en poids dudit (ou desdits monomère(s) de compatibilisation.

Les morphologies possibles du latex utilisé dans le procédé selon l'invention ne se limitent pas au type élastomère (dit "mou") et au type élastomère - non élastomère (dit "mou-dur") décrits ci-dessus, mais peuvent également être étendues à des morphologies plus complexes dont notamment celles de type dit "dur-mou-dur" décrites dans FR-A-2.159.882, celles de type élastomère non réticulé/élastomère réticulé/non élastomère décrites dans EP-A-0.277.874, ou encore celle décrites dans EP-A-0.279.724 et EP-A-270.865.

En ce qui concerne l'étape (b) du procédé selon l'invention, c'est-à-dire l'étape de transfert des particules de latex obtenues à l'étape précédente dans le monomère vinylique, on utilise généralement un mélange comprenant, pour 100 parties en poids, au moins 50 parties en poids et au plus 90 parties en poids de la phase aqueuse contenant le latex obtenue à la fin de l'étape (a) ou (a1) et au plus 50 parties en poids et au moins 10 parties en poids du monomère vinylique. Le transfert s'effectue généralement à une température allant de 0°C à 90°C environ.

Au cours de l'étape (c) du procédé selon l'invention, on sépare de la phase aqueuse la phase organique comprenant le latex et le monomère vinylique, cette opération s'effectuant par exemple soit par décantation, soit par centrifugation, selon les teneurs en latex exprimées en pourcentages en poids par rapport à la phase organique ; ainsi, pour des teneurs en latex inférieures à 6% environ, une simple décantation d'une à deux heures suffit à séparer les phases, cette décantation pouvant être facilitée par l'ajout, après le transfert, d'une solution aqueuse d'electrolyte (pouvant par exemple être du sulfate d'aluminium) ; par contre, pour des teneurs en latex supérieures à 6% environ (cas où la viscosité de la phase constituée par le monomère vinylique devient trop élevée) il devient souhaitable de centrifuger pour bien séparer les phases et sortir toute l'eau occluse dans la phase formée par le latex et le monomère vinylique. Il est souhaitable, à ce stade, d'éliminer toutes traces de microgouttes d'eau pour éviter l'obtention de plaques troubles. On notera par ailleurs que la viscosité de la phase monomère contenant le latex dépend non seulement de la teneur en latex mais également de l'indice de gonflement des particules de latex dans le monomère vinylique, et par conséquent du degré de réticulation de l'élastomère.

L'étape (d) du procédé selon l'invention est la polymérisation en masse entre deux plaques d'un moule résistant à la température maximale du mélange réactionnel et non réactif ou insoluble au contact de la charge liquide. Le moule utilisé est généralement constitué d'un verre minéral ; il peut cependant être avantageux, pour éviter la photocatalyse de polymérisation d'un des monomères présents, d'utiliser un moule réalisé à partir de substances telles que, par exemple, le polyéthylène, le polypropylène, le polyéthylène téréphtalate, des élastomères de silicone et des métaux comme par exemple l'aluminium, le cuivre, le nickel ou des alliages comme le laiton ou l'acier inoxydable. Un moule en métal sera plus particulièrement adapté lorsque le procédé selon l'invention est mis en oeuvre de manière continue, par exemple dans une installation du type laminoir. Cette étape de polymérisation s'effectue dans des conditions opératoires connues, notamment :
- en ce qui concerne la pression, une pression égale à la pression atmosphérique ou bien une pression pouvant atteindre jusqu'à 5 bars environ, ou encore une pression réduite jusqu'à 0,35 bar environ.
- en ce qui concerne la température, celle-ci pourra être choisie dans une gamme allant de 35°C à 135°C environ lorsque la pression est la pression atmosphérique. La température du moule pourra être augmentée progressivement, par exemple par paliers, à l'intérieur de cette gamme. De manière plus générale, il pourra être avantageux de prévoir un programme de température non uniforme dans le temps, c'est-à-dire comportant plusieurs étapes de différentes durées et conduites à différentes températures.

- en ce qui concerne la durée, une durée totale comprise de préférence entre 2 et 120 heures environ (sous pression atmosphérique) pour des plaques coulées d'épaisseur allant jusqu'à 50 mm.

De plus, afin de faciliter le démoulage en fin de procédé, il est particulièrement recommandé d'introduire dans le mélange réactionnel une quantité efficace d'au moins un agent de démoulage tel que, par exemple, du dioctylsulfosuccinate de sodium.

Le procédé selon la présente invention permet la fabrication de plaques coulées à résistance au choc améliorée, transparentes et ayant une épaisseur comprise entre 1,5 et 50 mm environ.

Les exemples suivants sont donnés afin de mieux illustrer l'objet de l'invention.

## EXEMPLE 1

Cet exemple concerne la préparation d'une plaque coulée de polyméthacrylate de méthyle contenant 5% en poids d'un latex de renforcement de type mou/dur.

a) synthèse du latex mou-dur

Le tableau 1 ci-après donne les compositions en parties en poids,-des solutions A, B, C, D, E, et F utilisées dans la synthèse de ce latex.

TABLEAU 1

| Solution / Composant | A | B | C | D | E | F |
|---|---|---|---|---|---|---|
| Eau | 2700 | 30 | -- | 350 | 350 | -- |
| Dodécylbenzène sulfonate de sodium | 8,32 | -- | -- | 2,1 | -- | -- |
| Carbonate de sodium | 5,4 | -- | -- | -- | -- | -- |
| Acrylate de n-butyle | -- | -- | 824,4 | -- | -- | -- |
| Styrène | -- | -- | 168,8 | -- | -- | -- |
| Diméthacrylate d'éthylène glycol | -- | -- | 41,6 | -- | -- | -- |
| Méthacrylate d'allyle | -- | -- | 5,2 | -- | -- | -- |
| Persulfate de potassium | -- | 4,16 | -- | -- | 1,55 | -- |
| Acrylate d'éthyle | -- | -- | -- | -- | -- | 22,4 |
| Méthacrylate de méthyle | -- | -- | -- | -- | -- | 534,5 |
| Tertiododécylmercaptan | -- | -- | -- | -- | -- | 2,2 |

La solution A est chauffée à 85°C dans un réacteur en verre à double-enveloppe, muni d'un réfrigérant, d'un balayage d'azote et d'une agitation. Lorsque la solution A a atteint la température de 85°C, on ajoute la solution B, puis on coule en 4 heures et 30 minutes la solution C en continu. A la fin de la coulée, le latex "mou" est cuit pendant 2 heures à 85°C, après ajout de la solution D. On ajoute ensuite la solution E, puis la solution F en continu pendant 2 heures en maintenant toujours la température du mélange à 85°C, et on termine la synthèse du latex par une cuisson à 85°C pendant 1 heure.

Le taux de conversion atteint est de 99,3%.

4

Le taux de solide, qui correspond au rapport de la masse de latex sec par la masse de latex aqueux multiplié par 100, est égal à 31,5%.

Les particules constituées du noyau mou seul ont une taille de 67 nm et les particules finales du latex "mou/dur" une taille de 78 nm.

b) transfert du latex dans le méthacrylate de méthyle

A un mélange constitué de 800g d'eau, 33,6g du latex aqueux obtenu à l'étape précédente (10g de partie solide) et de 200g de méthacrylate de méthyle non stabilisé, on ajoute sous agitation vigoureuse et à température ambiante, 21 ml d'une solution aqueuse 10-$^2$M. de chlorure de dodécyltriméthylammonium. Les deux derniers ml sont ajoutés lentement afin d'obtenir avec précision le volume critique assurant un transfert instantané et total des particules de latex de la phase aqueuse dans le méthacrylate de méthyle. Puis on arrête l'agitation, on centrifuge et on décante afin d'obtenir une phase méthacrylate de méthyle contenant 5% en poids de latex, exempte de microgouttelettes d'eau et de viscosité voisine de 2 cP. On ajoute ensuite 0,02g d'azodiisobutyronitrile équivalent à 100 ppm.

c) fabrication des plaques coulées

Le mélange de monomères contenant 5% de latex obtenu à l'étape précédente est dégazé puis coulé entre deux plaques de verre espacées de 3,8 mm munies d'un jonc en polychlorure de vinyle . On polymérise alors à 48°C pendant 24 heures puis à 115°C pendant 1 heure. Les propriétés mesurées sont :

- le module d'élasticité en traction déterminé selon la méthode ASTM D 638
- le choc Charpy non entaillé (écartement 40 mm) déterminé selon la méthode ISO 179,
- la température de Vicat B déterminée selon la méthode NFT 51 021,
- la transmission lumineuse (épaisseur 3 mm) déterminée selon la méthode ASTM D 1003 et les résultats obtenus sont regroupés dans le tableau 2 ci-après.

EXEMPLE 2 (comparatif)

Cet exemple concerne la préparation d'une plaque coulée en polyméthacrylate de méthyle ne comportant pas de latex de renforcement. Le procédé de fabrication utilisé est identique à celui décrit dans l'exemple 1 et les propriétés mesurées sont déterminées selon les méthodes définies dans l'exemple 1 ; les résultats obtenus sont regroupés dans le tableau 2 ci-après.

TABLEAU 2

| Exemple<br>Propriétés | 1 | 2 |
|---|---|---|
| Module d'élasticité en traction (MPa) | 2 900 | 3 300 |
| Choc Charpy non entaillé (KJ/m$^2$) | 20 | 10 |
| Vicat B (°C) | 113 | 113 |
| Transmission lumineuse (%) | 92,5 | 92,5 |

EXEMPLES 3 et 4

Ces exemples concernent la préparation de plaques coulées de polyméthacrylate de méthyle contenant respectivement 5% et 3% en poids de latex renforçateur de type "mou".

a) synthèse du latex "mou" sans coquille dure

Le tableau 3 ci-dessous donne les compositions, exprimées en parties en poids, des solutions A, B et C utilisées pour la synthèse de ce latex.

5

TABLEAU 3

| Composant \ Solution | A | B | C |
|---|---|---|---|
| Eau | 3800 | 100 | -- |
| Acide laurique | 2,44 | -- | -- |
| Soude | 2,44 | -- | -- |
| Persulfate de potassium | -- | 4,9 | -- |
| Acrylate de n-butyle | -- | -- | 984,7 |
| Styrène | -- | -- | 231,7 |
| Diméthacrylate d'éthylène glycol | -- | -- | 6,2 |
| Méthacrylate d'allyle | -- | -- | 6,2 |

Le mode opératoire est identique à celui décrit dans l'exemple 1, mais simplifié du fait qu'il n'y a pas de structure core/shell. Les caractéristiques du latex ainsi obtenu sont les suivantes :

| | |
|---|---|
| - diamètre des particules | 173 nm |
| - taux de solide | 24,1% |
| - pH | 6,5 |
| - indice de gonflement dans le méthacrylate de méthyle | 10 |

b) transfert du latex dans le méthacrylate de méthyle

Le mode opératoire est identique à celui décrit dans l'exemple 1. La solution de méthacrylate de méthyle obtenue à la fin de cette étape contient 5% en poids du latex obtenu à l'étape précédente (exemple 3) ; cette solution est alors diluée afin d'obtenir une solution supplémentaire de méthacrylate de méthyle contenant 3% en poids de latex (exemple 4).

c) fabrication des plaques coulées

Le procédé utilisé est identique à celui décrit dans l'exemple 1 et les propriétés mesurées pour les deux types de plaques coulées obtenues (renforcées respectivement avec 3% de latex et 5% de latex) sont déterminées selon les méthodes définies dans l'exemple 1 ; les résultats obtenus sont regroupés dans le tableau 4 ci-dessous.

## TABLEAU 4

| Exemples / Propriétés | 3 | 4 |
|---|---|---|
| Module d'élasticité en traction (MPa) | 3 100 | 2 900 |
| Choc Charpy non entaillé (KJ/m$^2$) | 17,3 | 20,1 |
| Vicat B (°C) | 113 | 113 |
| Transmission lumineuse (%) | 92,5 | 92,5 |

**Revendications**

1.  Procédé de fabrication d'une plaque coulée à base de résine thermoplastique résistant au choc, modifiée par un latex élastomère caractérisé en ce que :

    (a) dans une première étape on prépare un latex élastomère en émulsion aqueuse, en présence d'au moins un agent tensio-actif ionique, d'au moins un monomère éthyléniquement insaturé, puis

    (b) dans une seconde étape on ajoute au latex ainsi obtenu au moins un monomère vinylique, insoluble dans l'eau ou faiblement soluble dans l'eau et on neutralise les charges ioniques portées par ledit latex en ajoutant au mélange de latex et de monomère vinylique au moins un agent de transfert portant des charges ioniques opposées à celles du tensio-actif utilisé à l'étape (a), afin de réaliser le transfert des particules du latex dans le monomère vinylique, puis

    (c) dans une troisième étape on sépare de la phase aqueuse la phase organique comprenant le latex et le monomère vinylique, et enfin,

    (d) dans une quatrième étape, on effectue la polymérisation en masse de la phase organique entre les deux plaques d'un moule résistant à la température maximale du mélange réactionnel et non réactif ou insoluble au contact de la charge liquide, de manière à obtenir la plaque coulée après refroidissement et démoulage.

2.  Procédé selon la revendication 1, caractérisé par le fait qu'on choisit les quantités des différents monomères mis en jeu pour que la plaque coulée à base de résine thermoplastique produite contienne de 0,5% à 20% en poids de composant élastomère et de 99,5% à 80% en poids de monomère vinylique.

3.  Procédé selon l'une des revendications 1 et 2, caractérisé par le fait qu'on fait suivre l'étape (a) par une étape complémentaire (a1), consistant en une polymérisation en émulsion, avec le latex obtenu à l'étape (a), d'au moins un monomère vinylique dit monomère de compatibilisation, appartenant à la famille des monomères introduits à l'étape (b).

4.  Procédé selon la revendication 3, caractérisé par le fait que, pour la polymérisation de l'étape (a1), on utilise un (ou des) monomère(s) de compatibilisation de même nature que celui (ou ceux) utilisé(s) à l'étape (b).

5.  Procédé selon l'une des revendications 3 et 4, caractérisé par le fait qu'à l'étape (a1), on utilise, pour 100 parties en poids du mélange formé par le latex et le(s) monomère(s) de compatibilisation, de 99 à 15 parties en poids de la partie solide dudit latex et de 1 à 85 parties en poids dudit (ou desdits) monomère(s) de compatibilisation.

6.  Procédé selon l'une des revendications 1 à 5, caractérisé par le fait qu'on réalise le transfert de l'étape (b) à une température allant de 0°C à 90°C.

**7.** Procédé selon l'une des revendications 1 à 6 caractérisé en ce que le moule est soumis à une pression comprise entre 0,35 bar et 5 bars.

**8.** Procédé selon l'une des revendications 1 à 7 caractérisé en ce que le moule est soumis à la pression atmosphérique et à une température comprise entre 35°C et 135°C.

**9.** Procédé selon l'une des revendications 1 à 8 caractérisé en ce que le moule est soumis à un programme de température non uniforme dans le temps.

**10.** Procédé selon l'une des revendications 1 à 9 caractérisé en ce que le moule est soumis à des conditions de pression et de température pendant une durée comprise entre 2 et 120 heures.

**Claims**

**1.** Method of making a cast plate based on impact-resistant thermoplastic resin, modified by an elastomeric latex, characterized in that:

(a) in a first step, an elastomeric latex is prepared in aqueous emulsion, in the presence of at least one ionic surface-active agent, of at least one ethylenically unsaturated monomer, then

(b) in a second step, at least one vinyl monomer, insoluble in water or poorly soluble in water, is added to the latex thus obtained and the ionic charges carried by the said latex are neutralized by adding to the mixture of latex and of vinyl monomer at least one transfer agent carrying ionic charges opposite to those of the surface-active agent used in step (a), so as to carry out the transfer of the latex particles into the vinyl monomer, then

(c) in a third step, the organic phase comprising the latex and the vinyl monomer is separated from the aqueous phase, and finally,

(d) in a fourth step, the bulk polymerization of the organic phase is undertaken between the two plates of a mould which is resistant to the maximum temperature of the reaction mixture and non-reactive or insoluble in contact with the liquid charge, so as to obtain the cast plate after cooling and demoulding.

**2.** Method according to Claim 1, characterized in that the quantities of the various monomers involved are chosen in order that the cast plate produced, based on thermoplastic resin, contains from 0.5% to 20% by weight of elastomeric component and from 99.5% to 80% by weight of vinyl monomer.

**3.** Method according to either of Claims 1 and 2, characterized in that step (a) is followed by a complementary step (a1), consisting of an emulsion polymerization, with the latex obtained in step (a), of at least one vinyl monomer, called compatibilization monomer, belonging to the family of the monomers introduced in step (b).

**4.** Method according to Claim 3, characterized in that, for the polymerization of step (a1), a compatibilization monomer (or monomers) of the same kind as that (or those) used in step (b) is (are) used.

**5.** Method according to either of Claims 3 and 4, characterized in that, in step (a1), for 100 parts by weight of the mixture formed by the latex and the compatibilization monomer (or monomers), from 99 to 15 parts by weight of the solid part of the said latex and from 1 to 85 parts by weight of the said compatibilization monomer (or monomers) are used.

**6.** Method according to one of Claims 1 to 5, characterized in that the transfer of step (b) is carried out at a temperature ranging from 0°C to 90°C.

**7.** Method according to one of Claims 1 to 6, characterized in that the mould is subjected to a pressure of between 0.35 bar and 5 bar.

**8.** Method according to one of Claims 1 to 7, characterized in that the mould is subjected to atmospheric pressure and to a temperature of between 35°C and 135°C.

**9.** Method according to one of Claims 1 to 8, characterized in that the mould is subjected to a temperature programme which is non-uniform over time.

**10.** Method according to one of Claims 1 to 9, characterized in that the mould is subjected to temperature and pressure conditions during a period of between 2 and 120 hours.

**Patentansprüche**

**1.** Verfahren zur Herstellung einer gegossenen Platte auf Basis von schlagzähem thermoplastischem Harz, das durch ein Latex-Elastomer modifiziert wurde, dadurch gekennzeichnet, daß:

(a) man in einem ersten Schritt ein Latex-Elastomer in wäßriger Emulsion in Gegenwart mindestens eines ionischen oberflächenaktiven Mittels und mindestens eines ethylenisch ungesättigten Monomeren herstellt,

(b) man anschließend in einem zweiten Schritt zu dem so erhaltenen Latex mindestens ein in Wasser unlösliches oder schwach lösliches Vinylmonomer hinzugibt und die durch das Latex eingebrachten ionischen Ladungen neutralisiert, indem man zu der Mischung aus Latex und dem Vinylmonomeren mindestens ein Übertragungsmittel hinzugibt, das dem oberflächenaktiven Stoff aus Schritt (a) entgegengesetzte ionische Ladungen trägt, um eine Übertragung der Latexteilchen auf das Vinylmonomer zu realisieren,

(c) man danach in einem dritten Schritt die organischen Phase, die das Latex und das Vinylmonomer enthält, von der wäßrigen Phase abtrennt,

(d) und man schließlich in einem vierten Schritt die Polymerisation in Masse der organischen Phase zwischen zwei Platten einer Form durchführt, welche gegenüber der maximalen Temperatur der Reaktionsmischung beständig ist und die nicht mit der flüssigen Charge reagiert oder bei Kontakt von dieser gelöst werden kann, so daß nach Abkühlung und Entformung eine gegossene Platte erhalten wird.

**2.** Verfahren nach Anspruch 1, dadurch gekennzeichnet, daß man die Mengen der verschiedenen eingebrachten Monomeren so wählt, daß die hergestellte gegossene Platte auf Basis von thermoplastischem Harz 0,5 bis 20 Gew.-% der elastomeren Verbindung und 99,5 bis 80 Gew.-% des Vinylmonomers enthält.

**3.** Verfahren nach einem der Ansprüche 1 und 2, dadurch gekennzeichnet, daß dem Schritt (a) ein ergänzender Schritt (a1) folgt, der aus einer Emulsionspolymerisation mit dem aus dem Schritt (a) erhaltenen Latex und mindestens einem, als Kompatibilitätsmonomer bezeichneten Vinylmonomer, das zu der in dem Schritt (b) eingebrachten Monomerengruppe gehört, besteht.

**4.** Verfahren nach Anspruch 3, dadurch gekennzeichnet, daß man für die Polymerisation des Schritts (a1) ein oder mehrere Kompatibilitätsmonomer(e) gleicher Art wie das oder die im Schritt (b) verwendete(n) benutzt.

**5.** Verfahren nach einem der Ansprüche 3 und 4, dadurch gekennzeichnet, daß man im Schritt (a1) auf 100 Gewichtsteile der aus dem Latex und dem oder den Kompatibilitätsmonomeren gebildeten Mischung 99 bis 15 Gewichtsteile des festen Bestandteils des Latex und 1 bis 85 Gewichtsteile des oder der genannten Kompatibilitätsmonomere verwendet.

**6.** Verfahren nach einem der Ansprüche 1 bis 5, dadurch gekennzeichnet, daß man die Übertragung des Schritts (b) bei einer Temperatur zwischen 0 und 90°C durchführt.

**7.** Verfahren nach einem der Ansprüche 1 bis 6, dadurch gekennzeichnet, daß die Form einem Druck zwischen 0,35 und 5 bar unterliegt.

**8.** Verfahren nach einem der Ansprüche 1 bis 7, dadurch gekennzeichnet, daß die Form einem atmosphärischen Druck und einer Temperatur zwischen 35 und 135°C ausgesetzt wird.

**9.** Verfahren nach einem der Ansprüche 1 bis 8, dadurch gekennzeichnet, daß die Form einem Temperaturprogramm mit einem nicht konstanten Temperaturgradienten ausgesetzt wird.

**10.** Verfahren nach einem der Ansprüche 1 bis 9, dadurch gekennzeichnet, daß die Form den Druck- und Temperaturbedingungen für eine Dauer zwischen 2 und 120 Stunden unterliegt.